Europäisches Patentamt

European Patent Office

Office européen des brevets

(19)

(11) Publication number: **0 293 726 B1**

## EUROPEAN PATENT SPECIFICATION

(12)

(45) Date of publication of patent specification: **13.11.91**    (51) Int. Cl.⁵: **F16F 13/00**

(21) Application number: **88108292.9**

(22) Date of filing: **25.05.88**

(54) **Support device for damping radial vibrations.**

(30) Priority: **01.06.87 IT 2073787**

(43) Date of publication of application:
**07.12.88 Bulletin 88/49**

(45) Publication of the grant of the patent:
**13.11.91 Bulletin 91/46**

(84) Designated Contracting States:
**DE ES FR GB**

(56) References cited:
**EP-A- 0 012 638       EP-A- 0 042 761**
**EP-A- 0 057 774       DE-A- 3 618 767**
**FR-A- 2 473 662       FR-A- 2 587 429**

**PATENT ABSTRACTS OF JAPAN, vol. 10, no. 115 (M-474)[2172], 30th April 1986; & JP-A-60 245 849 (TOUKAI GOMU KOGYO K.K.) 05-12-1985**

**PATENT ABSTRACTS OF JAPAN, vol. 10, no. 267 (M-516)[2323], 11th September 1986; & JP-A-61 92 331 (TOKAI RUBBER IND. LTD) 10-05-1986**

(73) Proprietor: **PIRELLI SISTEMI ANTIVIBRANTI S.P.A.**
**Piazzale Cadorna, 5**
**I-20123 Milan(IT)**

(72) Inventor: **Seghi, Paolo**
**Via Freikofel, 19/2**
**Milan(IT)**
Inventor: **Cantu, Marco**
**Via Pace, 14**
**Carugate (Milan)(IT)**

(74) Representative: **Giannesi, Pier Giovanni et al**
**Pirelli S.p.A. Direzione Brevetti Piazzale Cadorna, 5**
**I-20123 Milano(IT)**

## Description

The present invention relates to a support device for damping radial vibrations comprising a fastening element, an annular support, made of elastomeric material integral with the fastening element, extending around it and comprising at least two chambers, situated at opposite sides with respect to the fastening element and separated from each other by at least two partition walls, a connection flange arranged around the elastic support, a connection duct connecting said chambers, said duct and said chambers being sealed with respect to the exterior and filled with an operating liquid.

The support device according to the invention is intended to be used when it is necessary to sustain - with respect to a supporting structure - a suspended mass subjected to vibrations in axial direction.

For example, said support device can be used to support the engine of motorvehicles having cylinders with horizontal or inclined axis.

As known, there are several types of support devices able to dampen the vibrations transmitted to them from the suspended mass to which they are connected.

It is known from the document EP-A-0 057 774 a damping device comprising a fastening element, an annular elastic support made of elastomeric material, integral with the fastening element and extending around it, and a connection flange arranged around the elastic support. The elastic support comprises two chambers separated from each other by two partition walls and communicating with each other through a connecting duct; the chambers and the duct are tightly sealed with respect to the exterior and filled with an operating fluid.

It is also known from the document EP-A-0 042 761 another damping device comprising an annular elastomeric support inserted in a cup-shaped body. The elastomer and the cup-shaped body define two lateral chambers and an upper and a lower chamber. At least the two lateral chambers are filled with fluid and communicate with each other through a passage developing circumferentially between the outer surface of the annular support and the cup-shaped body.

The damping effect of the radial vibrations of these devices is obtained through the change of volume of the chambers.

Unfortunately, the thickness of the annular supports in the axial direction is not constant because the elastomeric material forming the supports is not completely solid, due to the presence of the chambers. Therefore, the reaction of the annular supports to the loads generated by axial and radial vibrations is not uniform both in the axial and in the radial direction.

The present invention aims substantially at solving the above indicated problem.

This and other purposes of the invention, which will be more clearly apparent from the following description, are substantially achieved by means of a support device intended to dampen radial vibrations, characterized in that each of said partition walls is provided with at least one recess obtained on an outer surface of the elastic support, so that the resistant section of the elastic support located at the partition walls is substantially equal to the resistant section of the elastic support located at the chambers.

Further characteristics and advantages will be more clearly understood from the detailed description of a preferred but not exclusive embodiment of a support device intended to dampen radial vibrations uniformly in accordance with the present invention, made herebelow with reference to the attached drawings, given only by way of non-limiting example, in which:

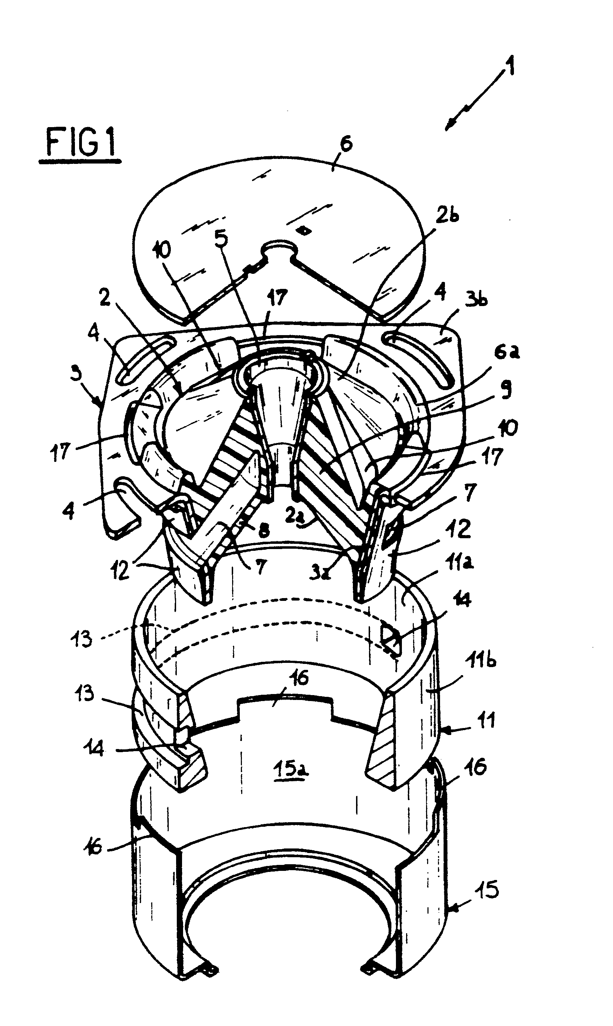

- figure 1 is a perspective and exploded view of the support device according to the invention, cut along a broken line,
- figure 2 is a section of the support device taken along line III-III of figure 3, and
- figure 3 is a top view of the support device.

With respect to the figures, the references numeral 1 indicates in its whole a support device according to the invention, intended to dampen radial vibrations.

Said support device 1 comprises an elastic support 2 of annular shape, made of an elastomeric material having an appropriate stiffness.

The elastic support 2 is rigidly engaged, by rubber/metal bonding, in a connection flange 3 comprising a frusto-conical tubular portion 3a, on whose inner surface is secured the support itself, and a connection portion 3b extending radially around support 2 and provided with holes 4 to allow the fastening of the support device 1 to a supporting structure not illustrated.

Moreover, a fastening element 5 having tubular structure and intended to connect a suspended mass to the support device 1 through threaded elements or the like, is also coaxially engaged in the elastic support 2, still by means of a rubber/metal bonding.

The load exerted by the suspended mass, acting axially, is withstood by the elastic deformation of the elastic support 2, which tends to lower with respect to the connection portion 3b and exerts a compression reaction against the internal frusto-conical surface of the tubular portion 3a.

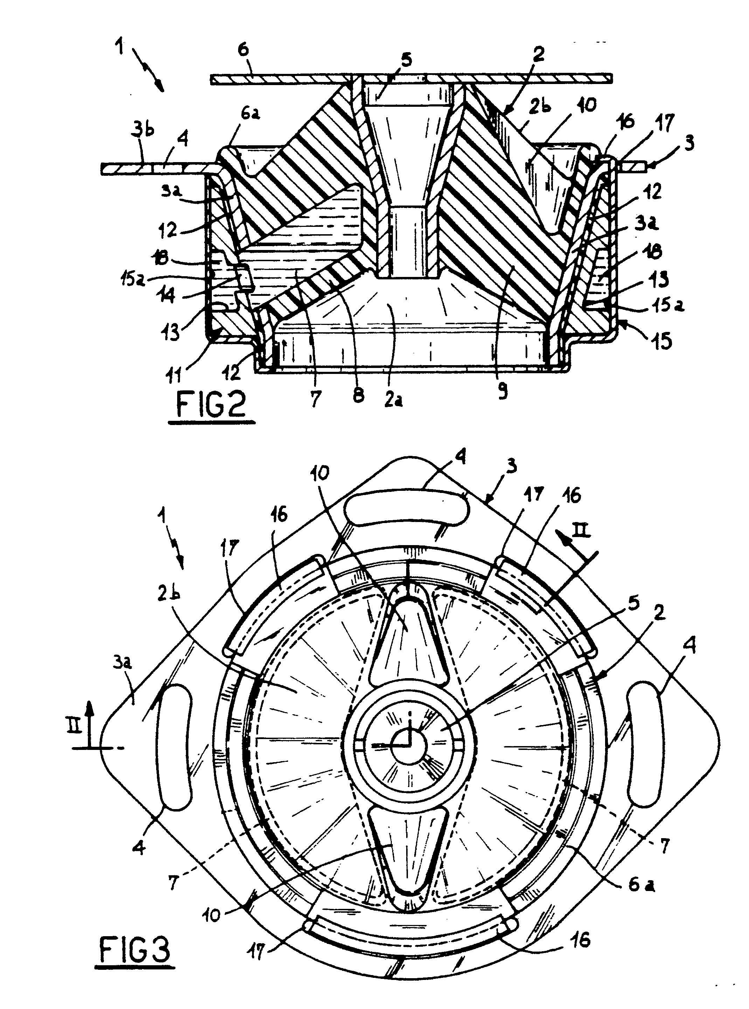

A stop plate 6 (not represented in figure 3), secured to the upper end of the fastening element 5, abuts against an abutting edge 6a formed by the elastic support 2, hindering therefore excessive deformations of the latter when the support device is to be subjected to a too high axial load.

The elastic support 2 comprises at least two chambers 7, diametrically opposite and extending from the sides of the support in the direction of the fastening element 5.

An opening obtained in the tubular portion 3c of the connection flange 3 corresponds to each chamber 7.

Chambers 7 are preferably adjacent an outer surface 2a shown at the bottom of the elastic support 2 so as to originate deformable diaphragms 8 for the purposes which will be indicated hereinafter.

Also, chambers 7, filled with an operating fluid of appropriate viscosity (as for example ethylene glycol) are separated from each other by means of two partition walls 9 associated to the elastic support 2 and arranged in diametrically opposite position.

At least two recesses 10, each situated at one of said partition walls 9, are obtained on the outer surface 2b shown at the top of the elastic support 2.

These recesses 10 reduce the area of the section of the elastic support 2 at the partition walls 9 so that the resistant section of the support corresponding to said walls is substantially equal to the resistant section of said support at chamber 7.

In this way, in spite of the presence of chamber 7, the elastic support 2 reacts uniformly with its whole section to the action of the axial load acting onto it.

Around the tubular portion 3a of the connecting flange 3 there is a collar 11 having an internal frusto-conical surface 11a, which fits with the outer surface of said tubular portion.

Preferably, a sealing layer 12, made of elastomeric material, is provided on the outer surface of the tubular portion 3a and is applied to the latter by rubber/metal bonding so as to ensure a tight seal between said portion and collar 11.

At least one circumferential groove 13 is obtained on an outer surface 11b of collar 11; said groove extends along a pre-established arc and communicates on opposite sides with chambers 7 through appropriately sized orifices 14.

Collar 11 is secured to flange 3 by a closing tubular element 15, which on its turn is rigidly engaged with flange 3 by means of laminar projections 16 provided on the upper part of the collar and turner by seam on the connection portion 3b through slits 17 suitably provided on the latter.

As it can be seen from figure 2, the closing element 15 has a shape complementar to that of flange 3 and collar 11 so as to form a compact unit with them.

Further, said closing element 15 comes into contact - upward and downward with respect to collar 11 - with portions of the sealing layer 12, so that collar 11 and chambers 7 are tightly sealed with respect to the exterior.

Advantageously, the above indicated groove 13 - together with a portion of the inner surface 15a of the closing element 15 - originates a connection duct 18, also filled with operating fluid, through which a passage of fluid between chambers 7 can take place.

The operation of the support device according to the invention, till now described with particular reference to its structure, is the following.

The stating loads due to the weight of the suspended mass, acting axially on the fastening element 5, are withstood by the elastic support 2 as described above.

Under the effect of the radial vibrations imparted by the suspended mass, the fastening element 5 is subjected to translate alternatively along a direction substantially orthogonal to the axis of the support device 1.

Each displacement carried out by the fastening element 5 gives rise to such a deformation of the elastic support 2 that the volume of one of chambers 7 tends to decrease, whilst the volume of the opposite chamber tends to increase.

In this situation, a part of the fluid contained in chamber 7, which collapses, is pushed through the respective orifice 14 into a connection duct 18; at the same time the fluid previously contained in the latter enters chamber 7, which expands.

During this translation, the fluid is subjected to load losses, owing to its forced passage through orifices 14 and along the connection duct 18.

Said load losses generate an energy dissipation which results in a damping of the vibrations transmitted by the suspended mass.

Diaphragms 8 are subjected to elastic deformation when the pressure of the fluid contained in the respective chambers tends to increase over a certain value.

In this way, diaphragms 8 prevent the resistance encountered by the fluid in its passage through orifices 14 from taking such an entity which may represent a serious obstacle to the movements of the fastening element 5.

In this case, the vibrations of the suspended mass would be unduly transmitted to the structure to which device 1 is fastened.

The present invention is able to achieve the purposes it aimed at.

In fact, the support device in question proves to be able to withstand, in an uniform way, axially acting static loads and, at the same time, to dampen vibrations acting along a radial direction.

Advantageously, in the embodiment described, the presence of two diametrically opposite chambers enables the quantity of fluid passing between them to be maximum when the radial vibrations take place along a direction orthogonal with respect to the axis of alignment of the partition walls 9.

As soon as the direction of the vibrations deviates from this condition, the quantity of fluid in motion decreases till to reach a negligible value when the direction of the vibrations coincides with the axis of alignment of the partition walls 9.

This permits to vary conveniently the entity of the damping action offered by the support device 1 by a simple modification in the orientation of the latter with respect to the direction of the vibrations transmitted to it.

From this point of view, the presence of the holes 4 which - within certain limits - allow the fastening of the support device according to a pre-established orientation, can prove advantageous.

In particular, the shape and size of the elastic support 2, of chamber 7, of orifices 14 and of the connection duct 18 can be varied according to the functional characteristics which it is wished to obtain in the support device 1.

Further, by exploiting for instance the space below the elastic support 2, for the support device in question it is possible to adopt already known conventional expedients in order to obtain also the damping of possible vertical vibrations.

## Claims

1. A support device (1) for damping radial vibrations comprising
   - a fastening element (5);
   - an annular elastic support (2), made of elastomeric material integral with the fastening element (5), extending around it and comprising at least two chambers (7), situated at opposite sides with respect to the fastening element (5) and separated from each other by at least two partition walls (9);
   - a connection flange (3) arranged around the elastic support (2);
   - a connection duct (18) connecting said chambers (7), said duct (18) and said chambers (7) being sealed with respect to the exterior and filled with an operating liquid;
   characterized by the fact that each of said partition walls (9) is provided with at least one recess (10) obtained on an outer surface of the elastic support (2), so that the resistant section of said elastic support (2) located at the partition walls (9) is substantially equal to the resistant section of the elastic support (2) located at the chambers (7).

2. A support device as in claim 1, characterised in that said chambers (7) extend from the sides of said elastic support (2) in the direction of the fastening element (5).

3. A support device as in claim 1, characterised in that said connection duct (18) is defined between at least one groove (13) circumferentially obtained on an outer surface of a collar (11) tightly engaged around a frusto-conical tubular portion (3a) of the flange (3) and a closing tubular element (15) sealed around the collar (11), said collar (11) being provided with at least two orificies (14) each of which is obtained at one of said chambers (7) to place it into communication with the connection duct (18).

4. A support device as in claim 1, characterised in that said chambers are adjacent an outer surface of the elastic support (2) and bounded by support diaphragms (8) deformable in consequence of the variations in the pressure of the fluid contained in the chamber.

5. A support device as in claim 1, characterised in that the connection flange (3) is provided with holes (4) extending concentrically to the axis of the support device to allow the fastening of the latter to a supporting structure according to a pre-established orientation.

## Revendications

1. Dispositif de support (1) pour amortir des variations radiales comprenant:
   un organe de fixation (5);
   un support élastique annulaire (2) en une matière élastomère, solidaire de l'organe de fixation (5), s'étendant autour de ce dernier et comprenant au moins deux chambres (7), disposées sur des côtés opposés par rapport à l'organe de fixation (5) et séparées l'une de l'autre par au moins deux cloisons de séparation (9);
   une bride de liaison (3) disposée autour du support élastique (2);
   un conduit de liaison (18) reliant lesdites chambres (7), ce conduit (18) et les chambres (7) étant fermés par rapport à l'extérieur et remplis d'un liquide actif;
   caractérisé en ce que chacune desdites cloisons de séparation (9) est pourvue d'au moins une cavité (10) formée sur une surface externe du support élastique (2), de manière que la section résistante dudit support élastique (2) au niveau des cloisons de séparation (9) soit à peu près égale à la section résistante du support élastique (2) au niveau des chambres (7).

2. Dispositif de support suivant la revendication 1, caractérisé en ce que lesdites chambres (7) s'étendent depuis les côtés dudit support élastique (2) dans la direction de l'organe de fixation (5).

3. Dispositif de support suivant la revendication 1, caractérisé en ce que ledit conduit de liaison (18) est délimité entre au moins une gorge (13) formée circonférentiellement sur une surface externe d'un collier (11) en contact d'étanchéité avec et autour d'une partie tubulaire tronconique (3a) de la bride (3) et un élément tubulaire de fermeture (15) fermé autour du collier (11), ce dernier comportant au moins deux orifices (14) dont chacun est formé au niveau de l'une des chambres (7) pour la faire communiquer avec le conduit de liaison (18).

4. Dispositif de support suivant la revendication 1, caractérisé en ce que lesdites chambres sont adjacentes à une surface externe du support élastique (2) et liées par des parois minces de support (8) déformables sous l'action de variations de la pression du fluide contenu dans la chambre.

5. Dispositif de support suivant la revendication 1, caractérisé en ce que la bride de liaison (3) comporte des trous (4) qui sont concentriques par rapport à l'axe du dispositif de support pour permettre de fixer ce dernier à une structure de support suivant une orientation prédéterminée.

**Patentansprüche**

1. Lagervorrichtung (1) zum Dämpfen radialer Schwingungen, mit
   - einem Befestigungselement (5)
   - einem ringförmigen elastischen Lager (2) aus elastischem Material, das mit dem dasselbe umgebenden Befestigungselement (5) einteilig verbunden ist und wenigstens zwei Kammern (7) aufweist, die bezüglich des Befestigungselements (5) an gegenüber liegenden Seiten angeordnet und durch wenigstens zwei Trennwände (9) voneinander getrennt sind,
   - einem ringsum das elastische Lager (2) angeordneten Verbindungssflansch (3),
   - einem die Kammern (7) verbindenden Verbindungskanal (18), wobei der Verbindungskanal (18) und die Kammern (7) nach außen abgedichtet und mit einer Arbeitsflüssigkeit gefüllt sind,
   dadurch **gekennzeichnet,** daß jede Trennwand (9) mit wenigstens einer an einer Außenfläche des elastischen Lagers (2) erhaltenen Ausnehmung (10) versehen ist, derart, daß der verbleibende, an den Trennwänden (9) befindliche Abschnitt des elastischen Lagers (2) im wesentlichen gleich ist dem an den Kammern (7) angeordneten verbleibenden Abschnitt des elastischen Lagers (2).

2. Lagervorrichtung nach Anspruch 1, dadurch gekennzeichnet, daß sich die Kammern (7) von den Seiten des elastischen Lagers (2) in Richtung des Befestigungselements (5) erstrecken.

3. Lagervorrichtung nach Anspruch 1, dadurch gekennzeichnet, daß der Verbindungskanal (18) begrenzt ist zwischen wenigstens einer Nut (13), die auf der Außenfläche eines Ringes (11) in Umfangsrichtung erhalten wurde, der einen kegelstumpfförmigen rohrförmigen Teil (3a) des Flansches (3) umschließt, und einem rohrförmigen Verschlußelement (18), das den Ring (11) dicht umschließt, wobei der Ring (11) mit wenigstens zwei Öffnungen (14) versehen ist, die je an einer der Kammern (7) ausgebildet ist und die Kammern (7) mit dem Verbindungskanal (18) verbindet.

4. Lagervorrichtung nach Anspruch 1, dadurch gekennzeichnet, daß die Kammern angrenzend an die äußere Oberfläche des elastischen Lagers (2) ausgebildet und mittels Lagermembranen (8) befestigt sind, die bei Änderungen des Drucks des in der Kammer enthaltenen Fluids verformbar sind.

5. Lagervorrichtung nach Anspruch 1, dadurch gekennzeichnet, daß der Verbindungsflansch (3) mit Öffnungen (4) versehen ist, die sich konzentrisch zur Achse der Lagervorrichtung erstrekken, so daß sich diese gemäß einer vorgegebenen Ausrichtung an einer Halteanordnung befestigen läßt.

EP 0 293 726 B1

# FIG 1

6

FIG2

FIG3